(19) Europäisches Patentamt

European Patent Office

Office européen des brevets

(11) **EP 1 497 911 B1**

(12) **EUROPÄISCHE PATENTSCHRIFT**

(45) Veröffentlichungstag und Bekanntmachung des Hinweises auf die Patenterteilung:
**05.10.2005 Patentblatt 2005/40**

(21) Anmeldenummer: **03746809.7**

(22) Anmeldetag: **16.04.2003**

(51) Int Cl.⁷: **H02M 5/297**, H02M 5/27

(86) Internationale Anmeldenummer:
**PCT/DE2003/001286**

(87) Internationale Veröffentlichungsnummer:
**WO 2003/090331 (30.10.2003 Gazette 2003/44)**

(54) **STROMVERSORGUNG MIT EINEM DIREKTUMRICHTER**

POWER SUPPLY WITH A DIRECT CONVERTER

ALIMENTATION ELECTRIQUE DOTEE D'UN CONVERTISSEUR DIRECT

(84) Benannte Vertragsstaaten:
**AT BE BG CH CY CZ DE DK EE ES FI FR GB GR HU IE IT LI LU MC NL PT RO SE SI SK TR**

(30) Priorität: **22.04.2002 DE 10217889**

(43) Veröffentlichungstag der Anmeldung:
**19.01.2005 Patentblatt 2005/03**

(73) Patentinhaber: **SIEMENS AKTIENGESELLSCHAFT**
**80333 München (DE)**

(72) Erfinder: **MARQUARDT, Rainer**
**85521 Ottobrunn / Riemerling (DE)**

(56) Entgegenhaltungen:
**FR-A- 2 814 006          GB-A- 2 294 821**

• **LEE T ET AL: "Performance of MCTs in a current regulated AC/AC PDM converter" PROCEEDINGS OF THE ANNUAL POWER ELECTRONICS SPECIALISTS CONFERENCE. (PESC). SEATTLE, JUNE 20 - 25, 1993, NEW YORK, IEEE, US, Bd. CONF. 24, 20. Juni 1993 (1993-06-20), Seiten 935-941, XP010148980 ISBN: 0-7803-1243-0**

• **VILLACA M V M ET AL: "A soft switched direct frequency changer" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, 8. Oktober 1995 (1995-10-08), Seiten 2321-2326, XP010193243 ISBN: 0-7803-3008-0**

**Beschreibung**

Die Erfindung betrifft eine Stromversorgung mit einem Direktumrichter, der als zwei- oder dreiphasige Brückenschaltung aufgebaut ist. Eine Stromversorgung dieser Art ist in der kritischen Patentanmeldung GB 2 294 821 A gezeigt. Eine derartige Anlage kann insbesondere zur Stromversorgung von Schienenfahrzeugen, aber auch zur Stromversorgung von stationären Einrichtungen angewendet werden, beispielsweise im Zusammenwirken mit einem Mittelfrequenz-Transformator.

Für Schienenfahrzeuge am Wechselspannungsfahrdraht wird in neuerer Zeit verstärkt nach technischen Lösungen gesucht, die den konventionellen Netztransformator entbehrlich machen. Nachteilig am Netztransformator sind insbesondere das hohe Gewicht und die relativ hohen Energieverluste.

Eine Lösung besteht in der Verwendung supraleitender Transformatoren, die jedoch unter anderem durch die benötigten Kühlanlagen für den Fahrzeugeinsatz problematischer als für stationäre Anlagen und deshalb zur Zeit technisch noch nicht ausgereift sind.

Andere bekannte Lösungen erfordern den direkten Anschluss der leistungselektronischen Umformer an die hohe Spannung des Wechselspannungsfahrdrahtes. Nachteilig sind hier bisher der hohe technische Aufwand und eine Reihe von Einschränkungen, die den universellen Einsatz behindern, wie im Folgenden erläutert wird.

Auf modernen elektrischen Triebfahrzeugen werden zur Speisung der Traktionsmotoren und der Hilfsbetriebe (Klimaanlage, und andere Verbraucher) generell leistungselektronische Umformer eingesetzt. Die weltweit eingeführten Fahrdrahtspannungen für Wechselspannungs-Triebfahrzeuge sind jedoch zwecks Minimierung der Übertragungsverluste sehr hoch gewählt worden (in Europa: 15 KV/16 2/3 Hz - sowie 25 KV/50 Hz). Diese hohen Spannungen erfordern bei Umgehung eines Netztransformators und direktem Anschluss an die Fahrdrahtspannung in der Leistungselektronik die Serienschaltung von Halbleitern oder von Teilstromrichtern - sowie insgesamt einen hohen technischen Aufwand. Folgende Varianten mit direktem Anschluss der leistungselektronischen Umformer an die Fahrdrahtspannung sind bekannt:

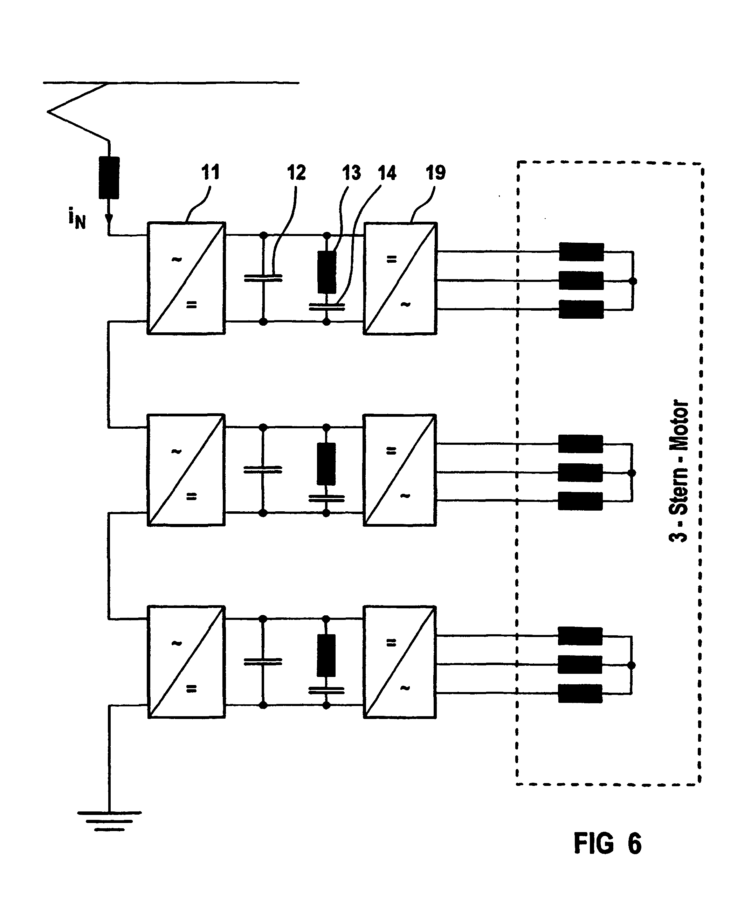

a) Einsatz hochspannungsisolierter Traktionsmotoren ohne galvanische Trennung der Motoren vom Fahrdraht, zum Beispiel bekannt aus Steiner et al, A New Tranformerless Topology for AC-Fed Traction Vehicles using Multi-Star Induction Motors, EPE 1999, Lausanne. Derartige Lösungen haben den Vorteil einer geringen Anzahl leistungselektronischer Umformerstufen, die im Pfad des Energieflusses zwischen Fahrdraht und Traktionsmotoren liegen. Dies reduziert die Energieverluste und den Aufwand in der Leistungselektronik. Ein Beispiel ist in Figur 6 gezeigt. Nachteilig sind hingegen:

- Die erforderliche, erhöhte Motorisolation wirkt sich nachteilig auf die Motorbaugröße, das Motorgewicht und/oder den Motorwirkungsgrad aus.

- Der zwingend erforderliche Leistungsausgleich zwischen den seriengeschalteten Teilstromrichtern (bei unterschiedlich belasteten Motoren) erfordert die Verwendung von komplexen Motorwicklungen mit einer großen Anzahl hochspannungsführender Anschlüsse (so genannte 3-Stern-Motoren).

- Die Anzahl der Traktionsmotoren ist nicht frei wählbar. Um die nachteiligen Auswirkungen der vorgenannten Punkte zu begrenzen, ist eine möglichst geringe Anzahl von Motoren großer Leistung zu wählen.

- Die hohen Gleichspannungskomponenten zwischen den seriengeschalteten Teilstromrichtern erschweren die Ausführung einer zuverlässigen Isolation unter realen Bedingungen (Schmutz, Feuchte).

- Die Speisung der Hilfsbetriebe erfordert einen erheblichen Zusatzaufwand.

- Um bei Ausfällen im Leistungsteil oder bei Isolationsfehlern in den Motoren eine eingeschränkte Funktionsfähigkeit aufrechtzuerhalten, sind zusätzliche Umschalteinrichtungen erforderlich (Redundanz).

b) Einsatz von gewöhnlichen Traktionsmotoren (mit niedriger Isolationsbeanspruchung) ohne galvanische Trennung vom Fahrdraht in der Nähe des Erdpotentials, zum Beispiel bekannt aus DE 197 21 450 C1. Die Nachteile und Einschränkungen der erstgenannten Lösung bei der Ausführung der Motoren werden hier vermieden. Weitere Vorteile sind ein guter Wirkungsgrad und geringe Oberschwingungsströme im Bahnnetz. Die erforderliche Spannungsübersetzung von der hohen Eingangsspannung (bis zu 25 kV Nennwert) auf gebräuchliche Ausgangsspannungen zur Speisung der Traktionsmotoren beträgt jedoch zirka 10:1. Prinzipbedingt sind leistungselektronische Umformer, die eine hohe Spannungsübersetzung ohne Zuhilfenahme von Transformatoren realisieren, bezüglich des Aufwandes an Energiespeichern und Halbleiterschaltern ungünstiger als Umformer gleicher Leistung, die nur eine niedrige Spannungsübersetzung realisieren müssen. Dieser prinzipbedingte Nachteil, insbesondere die Größe der benötigten Energiespeicher, behindert einen universellen Einsatz entsprechender Varianten.

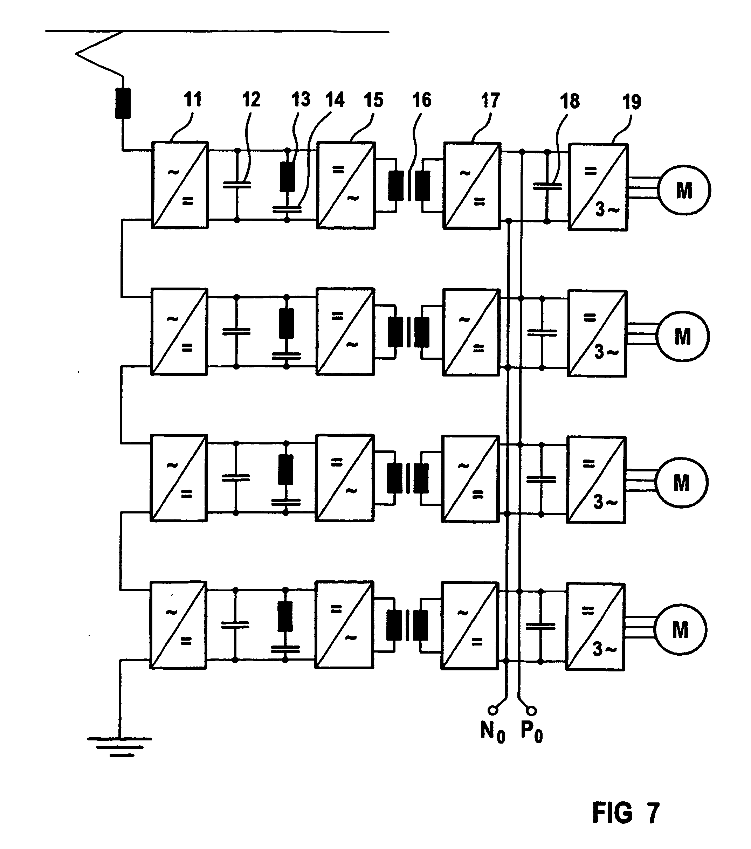

c) Galvanische Trennung der Motoren vom Fahrdraht unter Einsatz einer Anzahl einzelner Mittelfrequenz-Transformatoren, die jeweils einzelnen, seriengeschalteten Teilstromrichtern zugeordnet sind, zum Beispiel bekannt aus Schibli/Rufer, Single and Three-Phase Multilevel Converters for Traction Systems 50 Hz/16 2/3 Hz, LEI, Lausanne, S. 4.210 - 4.215. Varianten dieser Lösung sind bisher am häufigsten untersucht worden. Figur 7 zeigt eine entsprechende Schaltungsanordnung. Charakteristisch sind folgende Punkte:

- Netzseitig besteht eine Serienschaltung von Teilstromrichtergruppen, die in Summe eine treppenförmige Spannung erzeugen, deren steuerbare Maximalwerte die Netzspannungsscheitelwerte übersteigen müssen.

- Jede dieser Teilstromrichtergruppen weist einen netzseitigen Vierquadrantensteller, einen ersten Gleichspannungskondensator, einen primärseitigen Mittelfrequenz-Wechselrichter, einen Mittelfrequenz-Transformator, einen sekundärseitigen Mittelfrequenz-Gleichrichter und einen zweiten Gleichspannungskondensator auf. Alle Stromrichter sind für beide Energieflussrichtungen (Energieentnahme aus dem Bahnnetz als auch Energierückspeisung) auszulegen, falls Energierückspeisung in das Bahnnetz möglich sein soll.

- Bei einer solchen Anordnung treten die Nachteile der zuerst beschriebenen Lösung (Hochspannungsisolierte Traktionsmotoren) nicht auf. Die Isolationsbeanspruchung der Traktionsmotoren kann niedrig gehalten werden. Die Anzahl und die Betriebsspannung der Traktionsmotoren sind frei wählbar. Der Leistungsausgleich zwischen unterschiedlich belasteten Motoren kann über die Gleichspannungssammelschiene ($P_0$, $N_0$ in Figur 7) erfolgen. Nachteilig sind hingegen:

- Die hohe Anzahl leistungselektronischer Umformerstufen, die im Pfad des Energieflusses zwischen Fahrdraht und Traktionsmotoren liegen (hoher Aufwand, relativ große Energieverluste).

- Der hohe Aufwand an Energiespeichern (2 x Gleichspannungskondensatoren plus eventuelle Saugkreise) zur Glättung der Leistungspulsation doppelter Netzfrequenz.

- Die erforderliche, große Anzahl einzelner Mittelfrequenz-Transformatoren, die insgesamt bezüglich Gewicht und Raumbedarf ungünstiger als ein zentraler Transformator sind. Die Aufteilung auf viele einzelne Transformatoren wird zudem durch die (in Summe) zahlreichen, hochspannungsseitigen Anschlusspunkte der Transformatoren ungünstig und räumlich groß.

- Wie in der erstgenannten Variante erschweren die hohen Gleichspannungskomponenten zwischen den seriengeschalteten Teilstromrichtern die Ausführung einer zuverlässigen Isolation unter realen Bedingungen (Schmutz, Feuchte).

- Die Speisung der Hilfsbetriebe erfordert einen erheblichen Zusatzaufwand.

- Um bei Ausfällen im Leistungsteil oder bei Isolationsfehlern in den Motoren eine eingeschränkte Funktionsfähigkeit aufrechtzuerhalten, sind zusätzliche Umschalteinrichtungen erforderlich (Redundanz).

d) Galvanische Trennung der Motoren vom Fahrdraht unter Einsatz eines Mittelfrequenz-Transformators, der mittels eines Direktumrichters aus dem Fahrdraht gespeist wird, zum Beispiel bekannt aus DE 26 14 445 C2 oder Östlund, Influence of the control Principle on a High-Voltage Inverter System for Reduction of Traction-Transformer Weight, EPE, Aachen 1989.

Derartige Lösungen haben ebenfalls den Vorteil einer geringeren Anzahl leistungselektronischer Umformerstufen, die im Pfad des Energieflusses zwischen Fahrdraht und Traktionsmotoren liegen. Bei genügend hoher Mittelfrequenz (größenordnungsmäßig ab zirka 1 KHz) können Baugröße, Gewicht und Energieverluste des Mittelfrequenz-Transformators deutlich geringer als die entsprechenden Einbußen bei den Motoren gehalten werden. Zusätzlich ist eine aufwandsarme, effiziente Speisung der Hilfsbetriebe aus dem Mittelfrequenz-Transformator realisierbar. Dies wird im Allgemeinen vorteilhafterweise aus einer separaten Sekundärwicklung des Mittelfrequenz-Transformators erfolgen.

Die Realisierung des Direktumrichters mit Thyristoren entspricht jedoch aus mehreren Gründen nicht den gegenwärtigen und zukünftigen Anforderungen. Wesentliche Nachteile sind:

- Die erreichbare Mittelfrequenz ist wegen der Kommutierungszeiten der thyristorbestückten Schaltung auf einige 100 Hz beschränkt. Diese Frequenz ist für eine deutliche Gewichtsreduktion des Mittelfrequenz-Transformators nicht ausreichend.

- Die strengen Störstromgrenzwerte (Minimierung von Oberschwingungsströmen im Bahnnetz) für moderne Triebfahrzeuge sind nicht erfüllbar, weil prinzipbedingt die doppelte Mittelfrequenz und andere Störfrequenzen im Spektrum auftreten. Die doppelte Mittelfrequenz ist zudem bei weitem zu niedrig, um durch die induktive Netzimpedanz ausreichend gedämpft zu werden.

- Der Mittelfrequenz-Transformator wird an seiner Primärwicklung mit den hohen Spitzenspannungswerten der Fahrleitungsspannung plus deren transienten Überspannungsspitzen beansprucht. Dies erschwert die Ausführung der Isolation (Wicklungsisolation, Luftstrecken, Kriechstrecken) des Transformators.

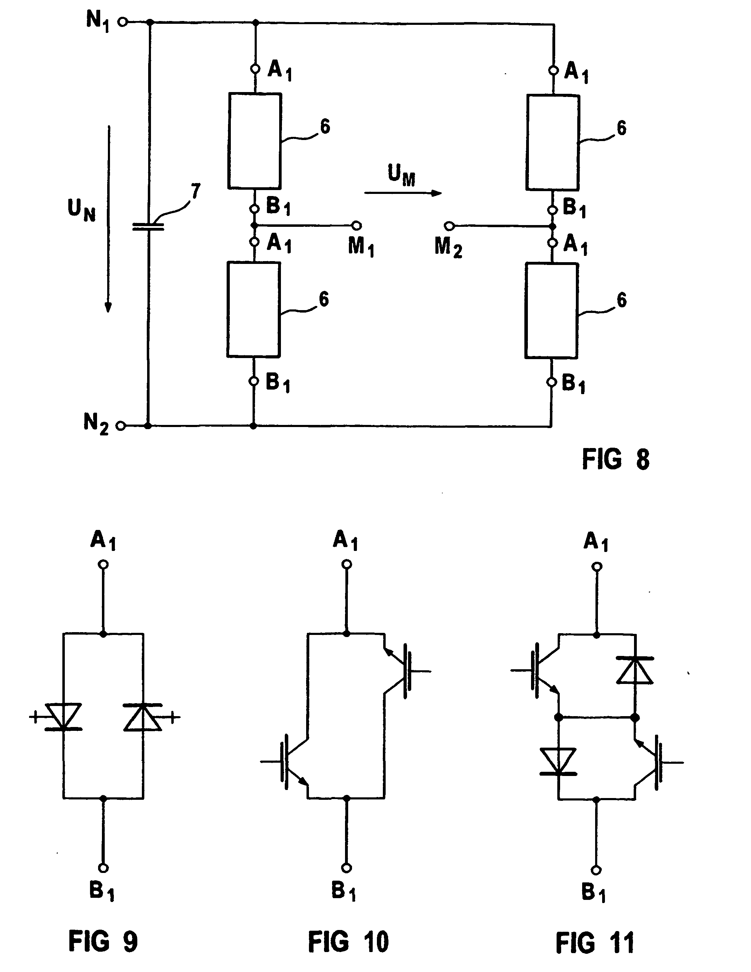

Direktumrichter mit abschaltbaren Leistungshalbleitern (im Allgemeinen: IGBT-Transistoren statt Thyristoren) sind in Form so genannter Matrix-Umrichter bekannt, zum Beispiel aus Kjaer et al, A Primary-Switched Line-Side Converter Using Zero-Voltage Switching, IEEE Transactions on Industry Applications, Vol. 37, No. 6, S 1824 - 1831. Figur 8 zeigt die Grundschaltung eines Matrix-Umrichters mit den Stromrichterzweigen und dem Filterkondensator. Die Stromrichterzweige werden in bekannter Weise mittels bidirektionaler steuerbarer elektronischer Schalter realisiert. Bekannte Realisierungen sind:

- Zwei abschaltbare Thyristoren (GTO-Thyristoren), die antiparallel geschaltet sind. Diese Bauelemente müssen rückwärtssperrfähig sein, das heißt beide Spannungspolaritäten sperren können (Figur 9).

- Zwei IGBT-Transistoren, die antiparallel geschaltet sind. Diese Bauelemente müssen rückwärtssperrfähig sein (Figur 10).

- Zwei IGBT-Transistoren, die mit antiparallelen Dioden beschaltet sind. Bauelemente mit Rückwärtssperrfähigkeit sind nicht erforderlich (Figur 11).

Folgende Nachteile des Direktumrichters sind jedoch auch mit diesen Ausführungsformen verbunden. Diese sind:

- Die bei einphasigen Wechselspannungsnetzen auftretende, niederfrequente Leistungspulsation (doppelte Netzfrequenz: $2f_N$), die vom Mittelfrequenz-Transformator übertragen werden muss. Baugröße und Wirkungsgrad des Mittelfrequenz-Transformators werden dadurch ungünstig beeinflusst.

- Der benötigte, netzseitige Filterkondensator, der störende Resonanzen im Bahnnetz verursachen kann und zu unerwünscht niedrigen Eingangsimpedanzen der Schaltung für höherfrequente Störströme führt.

- Im Gegensatz zu Umrichtern mit Gleichspannungszwischenkreis ("U-Umrichter") besteht kein Schutz der Leistungshalbleiter vor energiereichen Netzüberspannungen durch einen gleichspannungsseitigen Kondensator. Dies macht eine vergleichsweise erhebliche Überdimensionierung der Halbleitersperrspannungen erforderlich.

- Der Oberschwingungsgehalt der erzeugten Umrichterspannungen ist sowohl netzseitig als auch transformatorseitig sehr hoch. Günstige Schaltungen oder Verfahren zur Erzeugung treppenförmiger Spannungen geringen Oberschwingungsgehalts (analog Mehrpunkt-U-Umrichter) sind für Matrix-Umrichter nicht bekannt.

Für die vorliegenden Anwendungen des Matrix-Umrichters im höheren Leistungsbereich ist zusätzlich die Beherrschung hoher Spannungen und möglicher Störungsfälle ohne schwerwiegende Folgeschäden von großer Bedeutung. Nachteilige Punkte sind diesbezüglich:

- Bei Kurzschluss der Wechselspannungsseite zwischen den Schaltungspunkten $N_1$ und $N_2$ (siehe Figur 10) fließen extrem hohe Entladeströme aus dem wechselspannungsseitigen Filterkondensator, die Zerstörungen infolge extrem hoher mechanischer Kraftwirkungen und/ oder Lichtbogenschäden verursachen können.

- Beim Ausfall von Leistungshalbleitern oder fehlerhafter Ansteuerung kann der kurzschlussartige Entladestrom direkt über die Halbleiter fließen mit der Folge von Zerstörungen der Halbleiter und ihrer Kontaktierungen.

- Die für die Halbleiterschalter des Matrix-Umrichters erforderliche, sehr kleine Streuinduktivität des Filterkondensators und der Stromrichterzweige steht mit steigendem Spannungsniveau (bis zirka 50 KV Scheitelwert bei 25 KV-Fahrdrahtspannung) einer mechanisch kurzschlussfesten und isolationsmäßig sicheren konstruktiven Ausführung immer mehr entgegen. Eine freizügige, räumliche Anordnung der Komponenten wird zudem sehr behindert.

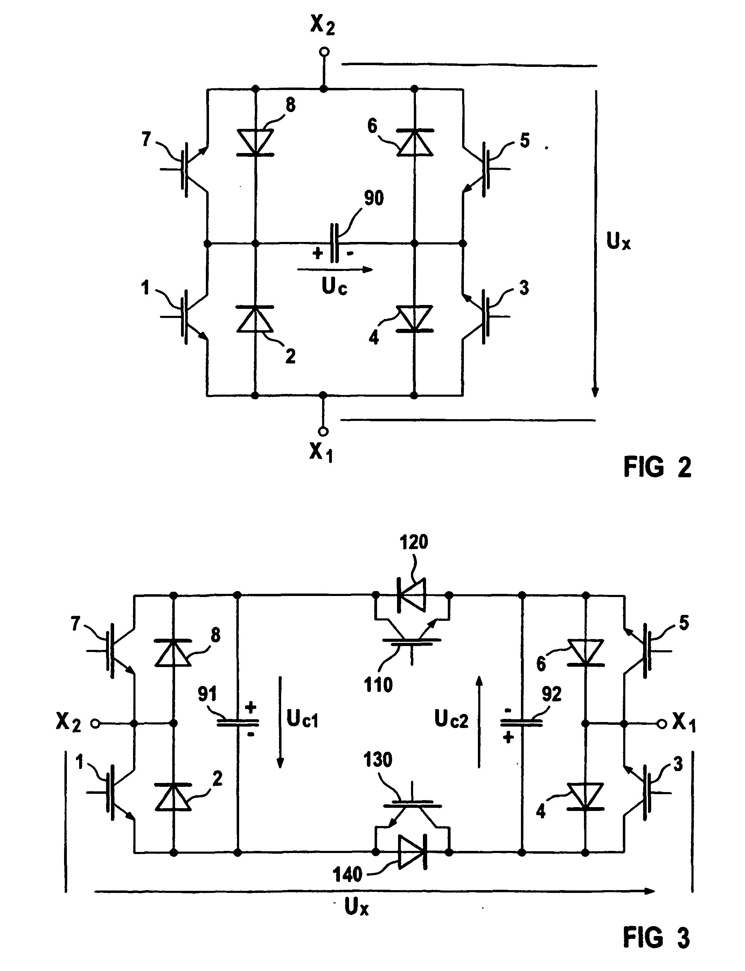

Eine Anordnung gemäß Figur 11 ist unter anderem aus Kjaer, am angeführten Ort, (siehe dort Figur 3), bekannt. Sie enthält gegenüber Figur 8 die drei folgenden Modifikationen:

- Der Filterkondensator ist aufgeteilt in mehrere Kondensatoren. Die resultierende Kapazität liegt jedoch weiterhin parallel zu den netzseitigen Anschlüssen des Matrix-Umrichters, so dass auch die Nachteile erhalten bleiben.

- Es sind in bekannter Weise zusätzliche Dämpfungswiderstände in Reihe mit den Filterkondensatoren geschaltet. Diese Maßnahme erzeugt hohe Energieverluste, sie ist jedoch notwendig geworden, weil die Filterkondensatoren zusätzlich als Beschaltung (Snubber) der IGBT benötigt werden.

- Der Matrix-Umrichter ist bezüglich der Mittelfrequenzseite dreiphasig aufgebaut worden. Gegenüber einem einphasigen Aufbau ermöglicht dies netzseitig etwas geringere Oberschwingungen. Eine genügend oberschwingungsarme, treppenförmige Spannung mit einer frei wählbaren Anzahl von Spannungsstufen ist jedoch weiterhin nicht möglich.

Aufgabe der Erfindung ist es, günstiger realisierbare leistungselektronische Umformer und zugehörige Steuerverfahren anzugeben, die frei von oben angeführten Einschränkungen universell einsetzbar sind. Die Schaltungsanordnung soll keine wechselspannungsseitigen Filterkondensatoren oder Beschaltungskondensatoren benötigen. Die unerwünschte Leistungspulsation doppelter Netzfrequenz soll mit geringem Aufwand an Energiespeichern zu glätten sein, so dass sie nicht mehr im Mittelfrequenz-Transformator und nachfolgenden Verbrauchern auftritt.

Erfindungsgemäß wird die Aufgabe gelöst durch die Merkmale der Ansprüche 1, 8, 9 und 10. Zweckmäßige Ausgestaltungen sind Gegenstand der Unteransprüche.

Danach werden die mit bidirektionalen Schaltern bestückten Stromrichterzweige der bekannten Matrix-Umrichter-Anordnung erfindungsgemäß durch eine Serienschaltung einer beliebigen Anzahl identischer Zweipole ersetzt, die die folgenden Eigenschaften aufweisen:

1) Die Zweipole weisen jeweils mindestens einen Schaltzustand I auf, in dem ihre Klemmenspannung unabhängig von der Größe und Polarität des Klemmenstromes positive Werte annimmt.

2) Die Zweipole weisen jeweils mindestens einen Schaltzustand II auf, in dem ihre Klemmenspannung unabhängig von der Größe und Polarität des Klemmenstromes negative Werte annimmt.

3) Die Zweipole haben mindestens einen internen Energiespeicher, vorzugsweise einen Kondensator.

Zweipole mit oben angegebenen Eigenschaften ermöglichen bei entsprechender Steuerung eine Vorgabe eingeprägter Klemmenspannungen sowohl netzseitig als auch mittelfrequenzseitig, wie im Folgenden erläutert wird. Sie benötigen keine externen Energiespeicher für ihre Funktion, wie zum Beispiel Filterkondensatoren oder Beschaltungskondensatoren.

Der Vorteil der erfindungsgemäßen Anordnung liegt bezüglich des Aufwandes an Halbleitern und Energiespeichern in der sehr gleichmäßigen Ausnutzung aller Elemente. Dies gilt insbesondere, wenn die gesamte, benötigte Halbleiterfläche und die gesamte Kondensatorenergie betrachtet werden. Eine Zweisystemauslegung (15 kV und 25 kV) ist ganz ohne Umschaltungen im Leistungsteil in günstiger Weise möglich. Der relative Mehraufwand - gegenüber einer reinen 15 kV-Auslegung - ist geringer als bei bekannten Schaltungen.

Weitere Vorteile sind:

- Die Probleme werden auf räumlich kleine Zweipole mit relativ niedrigen Spannungen begrenzt.

- Die streng modulare Realisierung des leistungselektronischen Umformers aus einer wählbaren Anzahl identischer Zweipole ermöglicht eine freizügige, räumliche Anordnung der Komponenten.

- Der Umformer ermöglicht die Realisierung treppenförmiger Spannungen geringen Oberschwingungsgehaltes sowohl an der Netzseite als auch an der Mittelfrequenzseite.

- Die Anzahl und Betriebsspannung der Traktionsmotoren können unabhängig von der Anzahl und Betriebsspannung der leistungselektronischen Zweipole gewählt werden.

- Amplitude und Frequenz der erzeugten Mittelfrequenz können zwecks einfacher Speisung der Hilfsbetriebe rein steuerungstechnisch und unabhängig von Netzfrequenz und Netzspannung stabilisiert werden.

- Mit geringem Aufwand lassen sich verschiedene Netzfrequenzen und -spannungen ohne zusätzliche Umschalteinrichtungen im leistungselektronischen Umformer, den Energiespeichern, den Mittelfrequenz-Transformatoren oder den Traktionsmotoren, beherrschen.

- Bei Ausfall eines oder mehrerer der Zweipole kann die Funktionsfähigkeit ohne zusätzliche Umschalteinrichtungen weiterhin gewährleistet werden (Redundanz).

Die Erfindung wird nachfolgend in Ausführungsbeispielen anhand der zugehörigen Zeichnungen näher erläutert. Es zeigen:

Figur 1 die Grundschaltung des erfindungsgemäßen Direktumrichters mit jeweils vier Zweipolen pro Stromrichterzweig;

Figur 2 eine erste Variante eines einzelnen Zweipols in einem Stromrichterzweig;

Figur 3 eine zweite Variante eines einzelnen Zweipols in einem Stromrichterzweig;

Figur 4 eine dritte Variante eines einzelnen Zweipols in einem Stromrichterzweig;

Figur 5 eine Grundschaltung des erfindungsgemä-ßen Direktumrichters als dreiphasige Aus-führung;

Figur 6 eine bekannte transformatorlose Stromver-sorgung mit hochspannungsisolierten Trak-tionsmotoren;

Figur 7 eine bekannte Stromversorgung mit mehreren Mittelfrequenz-Transformatoren;

Figur 8 die Grundschaltung eines bekannten Matrix-Umrichters;

Figur 9 einen Stromrichterzweig des Matrix-Umrichters gemäß Figur 6 mit zwei abschaltbaren Thyristoren;

Figur 10 einen Stromrichterzweig des Matrix-Umrichters gemäß Figur 6 mit zwei IGBT-Transistoren und

Figur 11 einen Stromrichterzweig des Matrix-Umrichters gemäß Figur 6 mit zwei IGBT-Transistoren und antiparallelen Dioden.

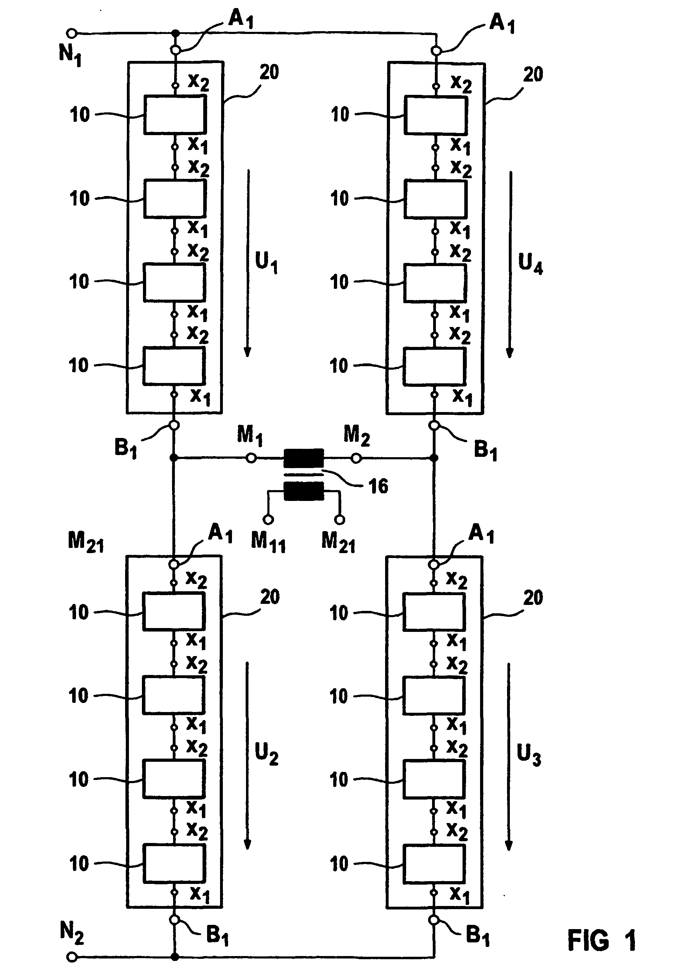

Figur 1 zeigt eine Grundschaltung des erfindungsgemäßen Matrix-Umrichters. Zwischen den Schaltungspunkten $N_1$ und $N_2$ liegt die netzseitige Spannung $U_N$ an. Vier Stromrichterzweige 20 sind in Form einer Brücke angeordnet, an deren Brückendiagonale sich ein Mittelfrequenz-Transformator befindet. Die Stromrichterzweige 20 bestehen jeweils aus vier Zweipolen 10, die die oben angegebenen Eigenschaften aufweisen.
Mögliche, vorteilhafte Realisierungen der Zweipole 10 sind in den Figuren 2, 3 und 4 dargestellt.
Figur 2 ist auch als Vollbrückenschaltung eines U-Umrichters oder als so genannter Vierquadrantensteller bekannt, mit dem Unterschied, dass sie hier als Zweipol 10 genutzt wird. Die Brückenschaltung ist aus vier IGBT-Transistoren 1, 2; 3, 4; 5, 6; 7, 8 aufgebaut. Die gleichstromseitigen Anschlüsse sind mit einem Kondensator 90 beschaltet.
Eine Realisierung des Zweipols 10 entsprechend Figur 2 hat zusätzlich die folgenden Eigenschaften:

- Es existieren Schaltzustände III, in denen die Klemmenspannung $U_X$ eines Zweipols 10 unabhängig von der Größe und Polarität des Klemmenstromes den Wert Null annimmt.

- Es existiert ein Schaltzustand IV, in dem ein Zweipol 10 unabhängig von der Klemmenstromrichtung keine Energie abgibt, sondern nur Energie aufnehmen kann.

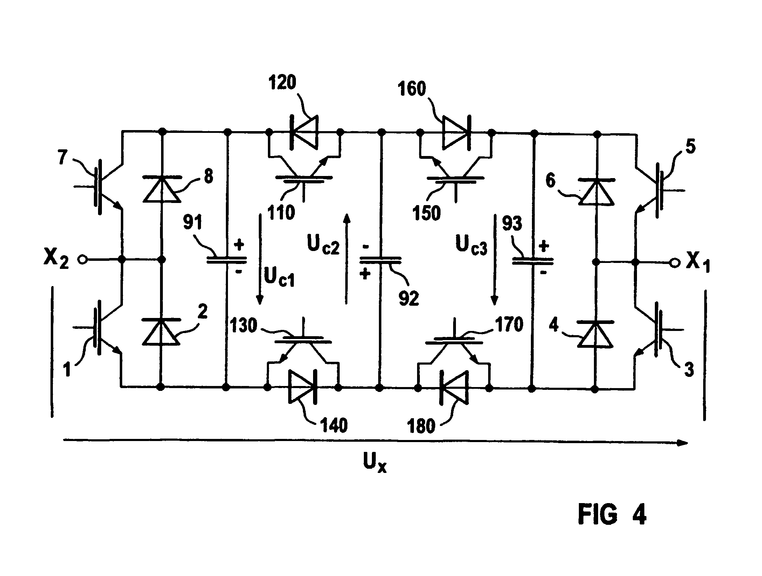

Auch eine andere mögliche Realisierung der Zweipole 10, wie sie Figur 3 zeigt, weist diese zusätzlich günstigen Schaltzustände auf. Hierbei handelt es sich um eine Kettenschaltung, das heißt um zwei Zweige zwischen den Klemmen $x_1$, $x_2$ mit in abwechselnder Richtung gepolten IGBT und Kondensatoren, die die Verbindungspunkte jeweils zweier IGBT jedes Zweiges verbinden, im gezeigten Beispiel jeweils drei IGBT 1, 2; 130, 140; 3, 4 und 7, 8; 110, 120; 5, 6 in jedem Zweig und zwei Kondensatoren 91, 92. Die Schaltung nach Figur 3 hat zusätzlich zwei weitere Spannungsstufen bei relativ geringer Schalterzahl.
Die Kettenschaltung lässt sich um weitere gleichartige Glieder erweitern, wie Figur 4 zeigt, für zwei Zweige mit jeweils vier IGBT 1, 2; 130, 140; 170, 180; 3, 4 und 7, 8; 110, 120; 150, 160; 5, 6 in jedem Zweig und drei Kondensatoren 91, 92, 93, wodurch die Anzahl der möglichen Spannungsstufen weiter erhöht wird.
Im Allgemeinen wird man den Zustand III (wie die Schaltzustände I und II) bei den nachstehend beschriebenen Steuerverfahren als zusätzliche diskrete Spannungsstufe nutzen. Der Schaltzustand IV kann bei Störungen und Betriebsunterbrechungen genutzt werden. Die Klemmenspannung $U_X$ wird in diesem Zustand wie durch einen Überspannungsschutz begrenzt, was sehr vorteilhaft ist.

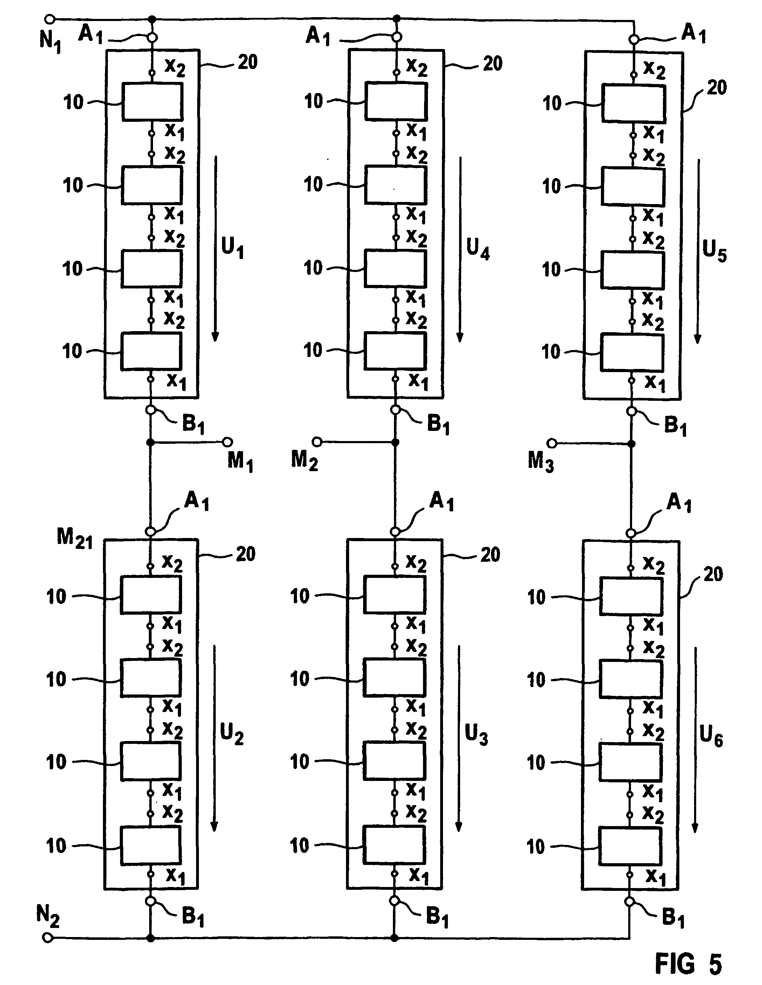

In Figur 5 ist ein Beispiel dargestellt, das zeigt, dass der erfindungsgemäße Direktumrichter auch als dreiphasige Ausführung realisierbar ist.
Das Steuerverfahren wird anhand von Figur 1 erläutert. Zusätzlich sei - zur Vereinfachung der Erläuterung - zuerst angenommen, dass die Kondensatorspannungen $U_C$ aller Zweipole 10 den gleichen Aus-gangsspannungswert $U_C = U_0$ aufweisen.
Jeder der Stromrichterzweige 20 in Figur 1 kann eine Klemmenspannung $U_X$

$$U_1 = n_1 * U_0$$

$$U_2 = n_2 * U_0$$

$$U_3 = n_3 * U_0$$

$$U_4 = n_4 * U_0$$

$$U_{1max} = 4 * U_0$$

vorgeben. Die Anzahl der möglichen verschiedenen, diskreten Werte der Klemmenspannung $U_X$ hängt von der Anzahl der Schaltzustände der Zweipole 10 und der Anzahl der seriengeschalteten Zweipole 10 pro Stromrichterzweig 20 ab. In der folgenden Erläuterung ist einfachheitshalber der Zweipol 10 nach Figur 2 und eine Serienschaltzahl von x = 4 angenommen. Jede Zahl $n_1$, $n_2$, $n_3$, $n_4$ kann dann den Wertebereich

$$\{-4, -3, -2, -1, 0, +1, +2, +3, +4\}$$

annehmen.

Die netzseitige Spannung $U_N$, das heißt die Potentialdifferenz zwischen den Schaltungspunkten $N_1$ und $N_2$, lässt sich damit in diskreten "Treppenstufen" der Stufenhöhe des Ausgangsspannungswertes $U_0$ zwischen

$$-8\ U_0 \leq U_N \leq + 8\ U_0$$

vorgeben. Es gilt:

$$U_N = U_1 + U_2 = U_3 + U_4$$

Die Mittelfrequenzspannung $U_M$, das heißt die Potentialdifferenz zwischen den primären Anschlüssen $M_1$ und $M_2$ des Mittelfrequenz-Transformators, lässt sich ebenso in diskreten "Treppenstufen" der Stufenhöhe des Ausgangsspannungswertes $U_0$ zwischen

$$-8\ U_0 \leq U_M + 8\ U_0$$

vorgeben. Es gilt:

$$U_M = U_2 - U_3 = U_4 - U_1$$

Netzseitige Spannung $U_N$ und Mittelfrequenzspannung $U_M$ lassen sich bezüglich Frequenz, Phasenlage und Amplitude völlig unabhängig voneinander vorgeben, solange die gewünschten Maximalwerte $\hat{U}_N$ und $\hat{U}_M$ in Summe nicht das Doppelte der maximal möglichen Spannung eines Stromrichterzweiges 20 überschreiten, das heißt:

$$\hat{U}_N + \hat{U} \leq 2\ U_{1max}$$

Im vorliegenden Beispiel ist:

(ebenso $U_{2max}$, $U_{3max}$, $U_{4max}$)

Im Allgemeinen wird man daran interessiert sein, die netzseitige Spannung $U_N$ und die Mittelfrequenzspannung $U_M$ den vorgegebenen, zeitlich variablen Sollwerten dadurch bestmöglich anzunähern, dass man zu beliebigen Zeitpunkten jeweils eine Treppenstufe weiterschaltet. Dies ist für die netzseitige Spannung $U_N$ und die Mittelfrequenzspannung $U_M$ völlig unabhängig voneinander möglich.

Um die netzseitige Spannung $U_N$ eine Treppenstufe zu erhöhen, sind $n_1$ und $n_4$ um eins zu erhöhen oder alternativ $n_2$ und $n_3$ um eins zu erhöhen. Die Mittelfrequenzspannung $U_M$ bleibt davon unbeeinflusst.

Um die Mittelfrequenzspannung $U_M$ um eine Treppenstufe zu erhöhen ist $n_2$ um eins zu erhöhen und $n_1$ um eins zu erniedrigen oder alternativ $n_3$ um eins zu vermindern und $n_4$ um eins zu erhöhen.

Alle diese Umschaltungen erfordern jeweils einen Schaltzustandswechsel von je einem Zweipol 10 in jeweils einem von zwei Stromrichterzweigen 20, das heißt insgesamt zwei Schaltzustandswechsel. Wegen der Serienschaltung mehrerer Zweipole 10 pro Stromrichterzweig 20 bestehen grundsätzlich Freiheitsgrade in der Auswahl des im betreffenden Stromrichterzweig 20 zu schaltenden Zweipols 10. Diese können vorteilhaft zu folgenden Zwecken genutzt werden:

- Um die erforderliche Schaltfrequenz der Zweipole 10 zu reduzieren.

- Um das zufällige, zeitliche Zusammentreffen von Umschaltungen der netzseitigen Spannung $U_N$ und der Mittelfrequenzspannung $U_M$ zu ermöglichen, ohne dass Einschränkung durch die Mindestschaltzeiten der Halbleiter berücksichtigt werden müssen.

- Um die einzelnen Kondensatorspannungen Uc der einzelnen Zweipole 10 in jedem Stromrichterzweig 20 zu symmetrieren.

Letzteres erfordert nur eine Messung der Kondensatorspannungen $U_C$. Entsprechende Verfahren sind grundsätzlich bekannt.

Es sei noch erwähnt, dass es grundsätzlich auch möglich ist, mit ebenfalls nur zwei Schaltzustandswechseln sowohl die netzseitige Spannung $U_N$ als auch die Mittelfrequenzspannung $U_M$ gleichzeitig zu schalten. Dies kann zur weiteren Reduktion der mittleren Schaltfrequenz der Halbleiter genutzt werden, kann jedoch auch geringe Einschränkungen bei der Kurvenform der netzseitigen Spannung $U_N$ oder der Mittelfrequenzspannung $U_M$ zur Folge haben.

Eine Anordnung entsprechend Figur 1 lässt sich vorteilhaft mit einer Hilfsspannungsquelle sehr niedriger Spannung vorladen. Die Vorladung muss deshalb nicht über hochspannungsseitige Schalter und Widerstände erfolgen. Diese Hilfsspannung muss nur die Größenordnung einer Kondensatorspannung $U_C$ erreichen, wenn die Zweipole 10 beim Aufladevorgang sukzessive durchgeschaltet werden. Vorteilhaft kann auch die Aufladung über den Mittelfrequenz-Transformator mittels eines vorhandenen Hilfsbetriebeumrichters genutzt werden, wenn diesem Energie aus einer Batterie zur Verfügung steht. Die Batteriespannung kann wesentlich niedriger als die betriebsmäßige Gleichspannung des Hilfsbetriebeumrichters sein. Vorteilhaft ist das Fehlen hochspannungsseitiger Schalter und die Möglichkeiten des Aufladens und Testens, bevor der hochspannungsseitige Hauptschalter eingelegt wird.

Die Funktionsfähigkeit einer Anordnung nach Figur 1 lässt sich auch bei Ausfällen im Bereich der Leistungselektronik und Steuerung aufrechterhalten. Am einfachsten ist dies, wenn die Zweipole 10 die Eigenschaft haben, bei eventuellen Ausfällen zwischen ihren Klemmen $x_1$ und $x_2$ einen Kurzschluss zu erzeugen. Dies ist bei Halbleiterbauelementen mit Druckkontakten im Allgemeinen gewährleistet. Für Bauelemente mit Kontaktdrähten ist es jedoch möglich, zusätzlich zwischen den Klemmen $x_1$ und $x_2$ so genannte Transientsupressor-Dioden anzuordnen, deren Kontaktierung (in dieser Anordnung) dann nur Strömen in Größenordnung der betriebsmäßigen Ströme standhalten muss.

Die Durchbruchspannung der Transientsupressor-Dioden ist so zu dimensionieren, dass sie oberhalb der im ungestörten Normalbetrieb zwischen den Klemmen $x_1$ und $x_2$ auftretenden Klemmenspannungen $U_X$ liegt. Treten dann im Störungsfall (Redundanzfall) - bedingt durch die Reihenschaltung der Zweipole 10 - höhere Klemmenspannungen Ux auf, werden diese kurzzeitig von der Diode begrenzt oder führen zum Durchlegieren der Diode (Impedanz gegen Null). Beide Fälle sind zulässig beziehungsweise erwünscht, um das Gesamtsystem weiter betreiben zu können. Zusätzliche Umschaltanordnungen können dadurch vermieden werden.

**Patentansprüche**

1.   Stromversorgung mit einem Direktumrichter, wobei jeder Phasenzweig aus einer Serienschaltung einer beliebigen Anzahl identischer Zweipole (10) besteht und der Direktumrichter als Brückenschaltung aufgebaut ist, deren Brückenzweige die Phasenzweige sind,
     **dadurch gekennzeichnet , dass** die Brückenschaltung zwei- oder dreiphasig ist und dass die Zweipole (10) jeweils die folgenden Eigenschaften aufweisen:

     -   Die Zweipole (10) weisen jeweils mindestens einen Schaltzustand (I) auf, in dem ihre Klemmenspannung ($U_X$) unabhängig von der Größe und Polarität des Klemmenstromes positive Werte annimmt.

     -   Die Zweipole (10) weisen jeweils mindestens einen Schaltzustand (II) auf, in dem ihre Klemmenspannung ($U_X$) unabhängig von der Größe und Polarität des Klemmenstromes negative Werte annimmt.

     -   Die Zweipole (10) haben mindestens einen internen Energiespeicher.

2.   Stromversorgung nach Anspruch 1, **dadurch gekennzeichnet, dass** der Energiespeicher ein Kondensator ($9_X$) ist.

3.   Stromversorgung nach Anspruch 1 oder 2, **dadurch gekennzeichnet, dass** die Brückenschaltung mit mindestens einem Mittelfrequenz-Transformator beschaltet ist.

4.   Stromversorgung nach einem der Ansprüche 1 bis 3, **dadurch gekennzeichnet, dass** der Zweipol (10) eine Brückenschaltung mit vier elektronischen Schaltern ist, deren Brückendiagonale mit einem Kondensator ($9_X$) beschaltet ist.

5.   Stromversorgung nach einem der Ansprüche 1 bis 3, **dadurch gekennzeichnet, dass** der Zweipol (10) eine Kettenschaltung ist mit elektronischen Schaltern in zwei parallelen Zweigen und Kondensatoren (9x), die die Verbindungspunkte jeweils zweier elektronischer Schalter jedes Zweiges verbinden.

6.   Stromversorgung nach Anspruch 5, **dadurch gekennzeichnet, dass** die elektronischen Schalter in abwechselnder Richtung gepolte IGBT sind.

7.   Stromversorgung nach einem der vorhergehenden Ansprüche, **dadurch gekennzeichnet, dass** parallel zu den Zweipolen (10) Transientsupressor-Dioden geschaltet sind.

8.   Verfahren zur Steuerung eines Direktumrichters, der gemäß einem der vorhergehenden Ansprüche aufgebaut ist, **dadurch gekennzeichnet, dass** die Spannung am Brückenausgang stufenweise verändert wird, indem in jeweils zwei in Reihe liegenden Brückenzweigen (20) ein Zweipol (10) von einem Schaltzustand, in dem seine Klemmenspannung ($U_X$) Null oder negativ ist, in einen Schaltzustand geschaltet wird, in dem seine Klemmenspannung (Ux) positiv oder Null ist, und umgekehrt.

9.   Verfahren zur Steuerung eines Direktumrichters, der gemäß einem der Ansprüche 1 bis 7 aufgebaut ist, **dadurch gekennzeichnet, dass** die Spannung am Netz stufenweise verändert wird, indem in jeweils zwei parallelen Brückenzweigen (20) ein Zweipol (10) von einem Schaltzustand, in dem seine Klemmenspannung ($U_X$) Null oder negativ ist, in einen Schaltzustand geschaltet wird, in dem seine Klemmenspannung ($U_X$) positiv oder Null ist, und umgekehrt.

10. Verfahren zur Steuerung eines Direktumrichters, der gemäß einem der Ansprüche 1 bis 7 aufgebaut ist, **dadurch gekennzeichnet, dass** die Spannungen am Brückenausgang und am Netz gleichzeitig stufenweise verändert werden, indem in jeweils zwei diagonalen Brückenzweigen (20) ein Zweipol (10) von einem Schaltzustand, in dem seine Klemmenspannung ($U_X$) Null oder negativ ist, in einen Schaltzustand geschaltet wird, in dem seine Klemmenspannung ($U_X$) positiv oder Null ist, und umgekehrt.

**Claims**

1. Power supply with a direct converter, with each phase branch comprising any desired number of identical two-pole networks (10) connected in series, and the direct converter being in the form of a bridge circuit, whose bridge arms are the phase branches,
   **characterized in that** the bridge circuit is a two-phase or three-phase circuit, and **in that** the two-pole networks (10) each have the following characteristics:

   - The two-pole networks (10) each have at least one switching state (I) in which their terminal voltage ($U_X$) assumes positive values irrespective of the magnitude and polarity of the terminal current.

   - The two-pole networks (10) each have at least one switching state (II) in which their terminal voltage ($U_X$) assumes negative values irrespective of the magnitude and polarity of the terminal current.

   - The two-pole networks (10) have at least one internal energy store.

2. Power supply according to Claim 1, **characterized in that** the energy store is a capacitor ($9_x$).

3. Power supply according to Claim 1 or 2, **characterized in that** the bridge circuit is connected to at least one medium-frequency transformer.

4. Power supply according to one of Claims 1 to 3, **characterized in that** the two-pole network (10) is a bridge circuit with four electronic switches, whose bridge diagonal is connected to a capacitor ($9_x$).

5. Power supply according to one of Claims 1 to 3, **characterized in that** the two-pole network (10) is a chain circuit with electronic switches in two parallel branches and capacitors ($9_x$) which connect the junction points of in each case two electronic switches in each branch.

6. Power supply according to Claim 5, **characterized in that** the electronic switches are IGBTs connected in alternate polarity directions.

7. Power supply according to one of the preceding claims, **characterized in that** transient suppressor diodes are connected in parallel with the two-pole networks (10).

8. Method for controlling a direct converter which is designed according to one of the preceding claims, **characterized in that** the voltage at the bridge output is changed in steps **in that**, in in each case two series-connected bridge arms (20), one two-pole network (10) is switched from a switching state in which its terminal voltage ($U_X$) is zero or negative to a switching state in which its terminal voltage ($U_X$) is positive or zero, or vice versa.

9. Method for controlling a direct converter which is designed according to one of Claims 1 to 7, **characterized in that** the voltage at the mains power supply is changed in steps **in that**, in in each case two parallel bridge arms (20), one two-pole network (10) is switched from a switching state in which its terminal voltage ($U_X$) is zero or negative to a switching state in which its terminal voltage ($U_X$) is positive or zero, and vice versa.

10. Method for controlling a direct converter which is designed according to one of Claims 1 to 7, **characterized in that** the voltages at the bridge output and at the mains power supply are changed at the same time in steps **in that**, in in each case two diagonal bridge arms (20), one two-pole network (10) is switched from a switching state in which its terminal voltage ($U_X$) is zero or negative to a switching state in which its terminal voltage ($U_X$) is positive or zero, and vice versa.

**Revendications**

1. Alimentation en courant avec un convertisseur direct, chaque branche de phase étant constituée d'un montage en série d'un nombre quelconque de dipôles identiques (10) et le convertisseur direct étant construit comme un circuit à pont dont les branches de pont sont les branches de phase, **caractérisée par le fait que** le circuit à pont est biphasé ou triphasé et que les dipôles (10) ont à chaque fois les propriétés suivantes :

- Les dipôles (10) ont à chaque fois au moins un état de commutation (I) dans lequel leur tension ($U_X$) aux bornes prend des valeurs positives indépendamment de la grandeur et de la polarité du courant aux bornes.
- Les dipôles (10) ont à chaque fois au moins un état de commutation (II) dans lequel leur tension ($U_X$) aux bornes prend des valeurs négatives indépendamment de la grandeur et de la polarité du courant aux bornes.
- Les dipôles (10) ont au moins un accumulateur d'énergie interne.

2. Alimentation en courant selon la revendication 1, **caractérisée par le fait que** l'accumulateur d'énergie est un condensateur ($9_X$).

3. Alimentation en courant selon la revendication 1 ou 2, **caractérisée par le fait que** le circuit à pont est branché avec au moins un transformateur moyenne fréquence.

4. Alimentation en courant selon l'une des revendications 1 à 3, **caractérisée par le fait que** le dipôle (10) est un circuit à pont avec quatre commutateurs électroniques dont la diagonale de pont est branchée avec un condensateur ($9_X$).

5. Alimentation en courant selon l'une des revendications 1 à 3, **caractérisée par le fait que** le dipôle (10) est un circuit en chaîne avec des commutateurs électroniques dans deux branches parallèles et avec des condensateurs ($9_X$) qui relient les points de liaison à chaque fois de deux commutateurs électroniques de chaque branche.

6. Alimentation en courant selon la revendication 5, **caractérisée par le fait que** les commutateurs électroniques sont des IGBT polarisés dans des sens alternés.

7. Alimentation en courant selon l'une des revendications précédentes, **caractérisée par le fait que** des diodes de suppression de phénomènes transitoires sont branchées en parallèle avec les dipôles (10).

8. Procédé pour la commande d'un convertisseur direct qui est construit selon l'une des revendications précédentes, **caractérisé par le fait qu'**on modifie par échelons la tension à la sortie de pont, un dipôle (10) dans à chaque fois deux branches de pont (20) en série étant commuté d'un état de commutation dans lequel sa tension ($U_X$) aux bornes est nulle ou négative à un état de commutation dans lequel sa tension ($U_X$) aux bornes est positive ou nulle, et inversement.

9. Procédé pour la commande d'un convertisseur direct qui est construit selon l'une des revendications 1 à 7, **caractérisé par le fait qu'**on modifie par échelons la tension au réseau, un dipôle (10) dans à chaque fois deux branches de pont (20) en parallèle étant commuté d'un état de commutation dans lequel sa tension ($U_X$) aux bornes est nulle ou négative à un état de commutation dans lequel sa tension ($U_X$) aux bornes est positive ou nulle, et inversement.

10. Procédé pour la commande d'un convertisseur direct qui est construit selon l'une des revendications 1 à 7, **caractérisé par le fait qu'**on modifie simultanément par échelons les tensions à la sortie de pont et au réseau, un dipôle (10) dans à chaque fois deux branches de pont (20) en diagonale étant commuté d'un état de commutation dans lequel sa tension ($U_X$) aux bornes est nulle ou négative à un état de commutation dans lequel sa tension ($U_X$) aux bornes est positive ou nulle, et inversement.

FIG 1

FIG 2

FIG 3

FIG 4

FIG 5

FIG 6

FIG 7

FIG 8

FIG 9

FIG 10

FIG 11